# EUROPÄISCHE PATENTSCHRIFT

(11) **EP 2 098 116 B1**
(45) Veröffentlichungstag und Bekanntmachung des Hinweises auf die Patenterteilung: **29.06.2011**
(21) Anmeldenummer: 08004306.0
(22) Anmeldetag: 07.03.2008
(51) Int. Cl.: A01M 1/20

(54) **Fernsteurbare, stationäre, Zeitgesteuerte Vorrichtung zur Bekämpfung von Fluginsekten**
Remote control, stationary, scheduled device for combating flying insects
Dispositif télécommandable, stationnaire, commandé dans le temps destiné à lutter contre les insectes volants

(43) Veröffentlichungstag der Anmeldung: 09.09.2009
(73) Patentinhaber: Menno Chemie-Vertrieb GmbH, 22850 Norderstedt (DE)
(72) Erfinder: Nevermann, Jan, 22848 Norderstedt (DE); Von der Haar, Frank, 49577 Ankum-Rüssel (DE)
(74) Vertreter: Becker Kurig Straus

(56) Entgegenhaltungen:
- WO-A-80/02097
- WO-A-81/00954
- GB-A- 2 240 042
- US-A- 3 889 881
- US-A- 4 028 841
- US-A1- 2006 006 197
- US-B1- 7 066 218

## Beschreibung

### Gebiet der Erfindung

Die vorliegende Erfindung betrifft eine fernsteuerbare, stationäre, zeitgesteuerte Vorrichtung zur Bekämpfung von Fluginsekten in offenen und geschlossenen Gebäuden und Stallungen zur Tierhaltung. Insbesondere betrifft die vorliegende Erfindung die Verwendung einer fernsteuerbaren stationären zeitgesteuerten Vorrichtung zur Bekämpfung von Fluginsekten in offenen und geschlossenen Großtierstallungen, wie beispielsweise Schweinestallungen, Rinderstallungen und Pferdestallungen.

### Stand der Technik

In der Tierhaltung, insbesondere in der Schweine-, Rinder- und Pferdehaltung, führt das starke Auftreten von Fluginsekten (Pterygota), wie beispielsweise Fliegen oder Gnitzen, zu einer Gefährdung der Tiergesundheit. Fluginsekten werden hierbei häufig durch die Ansammlung von Gülle im Güllebereich der Stallung angezogen.

Fliegen (Brachycera) sind nicht nur lästige Plagegeister, sondern stellen eine ernst zu nehmende Gefahr bei der Übertragung von Krankheiten und der Kontamination von Futter- und Nahrungsmitteln mit Keimen dar. Da der bevorzugte Aufenthaltsort von Fliegen Exkremente, Abfälle und Wunden sind, können Fliegen Krankheiten wie beispielsweise Rotlauf, Dysenterie, Schweinepest, MKS und Salmonellose übertragen. Entweder werden die Krankheitserreger von der Fliege aufgenommen oder durch sie weitertransportiert. Zusätzlich führt ein hoher Fliegenbefall im Stall zu Stress bei den Tieren. Es entstehen Leistungsdepressionen und wirtschaftliche Schälen, besonders in der Schweinemast. Mücken der Gattung Culicoides aus der Familie der Gnitzen (Ceratopogonidae) übertragen die Blauzungenkrankheit, welche insbesondere Rinder befällt. Ohne sichtbare Erkrankungszeichen kann es zu Aborten, Fruchtbarkeitsstörungen, fetalen Missbildungen sowie erhöhter Kälbersterblichkeit kommen. Auch schwere Krankheitsverläufe mit hohem Fieber und schweren Entzündungen sind bekannt. Mit Stand vom 22. Februar 2008 wurden allein in Deutschland 21752 Fälle der Blauzungenkrankheit amtlich gemeldet.

Daher wird mit einer Vielzahl von Insektiziden versucht, den Fluginsektenbefall in Ställen einzudämmen. Hierbei finden als Wirkstoffe insbesondere Phosphorsäureester wie Chlorpyriphos und Dichlorvos (DDVP), Neonicotinoide, wie Clothianidin, sowie Pyrethroide der dritten und vierten Generation wie Cypermethrin, Cyphenothrin, Deltamethrin, Fenvalerat und Permethrin, gegebenenfalls in Kombination mit Piperonylbutoxid als Synergist, und andere gängige Insektizide Verwendung.

Eine Vorrichtung zum Versprühen solcher Insektizide in Ställen wird beispielsweise in der WO 80/02097 offenbart. Diese Vorrichtung umfasst mehrere mit Düsen versehene Insektizidbehälter, welche unter der Decke eines Stalls angebracht sind. Durch Zuführung von Druckluft aus einer zentralen Druckluftquelle kann eine in den Behältern gelagerte Insektizidlösung im Stall versprüht werden. Die Druckluftzufuhr wird hierbei durch zeitgesteuertes Öffnen und Schließen eines Ventils mittels eines Timers geregelt.

Allen diesen Insektiziden ist gemein, dass sie auf Flächen innerhalb von Ställen aufgebracht werden und dort auf Grund ihrer hohen Persistenz für längere Zeit verbleiben. Dies hat jedoch mehrere Nachteile. Es kommt häufig zu Resistenzbildung der Fluginsekten gegenüber dem verwendeten Insektizid. Zudem kann das Insektizid nur dann gegen die Fluginsekten wirken, wenn sie sich auf den behandelten Flächen niederlassen. Schließlich stellen solche langlebigen Insektizide eine Gefahr für die Umwelt dar und können insbesondere in offenen Ställen und in der ökologischen Tierhaltung nicht verwendet werden.

Eine Alternative zu persistenten Insektiziden stellen instabile Insektizide dar, die durch Licht oder den Kontakt mit alkalischen Substanzen, wie beispielsweise der Gülle in Ställen, schnell abgebaut werden. Eine solche Gruppe von Insektiziden stellen natürliches Pyrethrum, die Pyrethrine, sowie Pyrethroide der ersten und zweiten Generation dar. Diese haben eine schnell einsetzende Initialwirkung auf Insekten ("knock down effect") als Kontakt- und Nervengift.

Die Kurzlebigkeit dieser Insektizide hat einen wirksamen Einsatz zur Insektenbekämpfung jedoch bisher verhindert. So ist nur bekannt bei akutem Insektenbefall mittels einer tragbaren Sprühvorrichtung einmalig eine Lösung oder Emulsion von natürlichem Pyrethrum, Pyrethrinen oder Pyrethroiden der ersten und zweiten Generation zu versprühen um den Insektendruck kurzfristig zu verringern. Solche Sprühvorrichtungen werden auch im Haus und Gartenbereich eingesetzt. Es ist auch bekannt, mittels eines elektrischen Verdampfers einen Nebel dieser Insektizide aufrecht zu erhalten. Dies führt jedoch zu einem sehr hohen Insektizidverbrauch. Zudem ist ein solches Vorgehen gesundheitlich bedenklich, weil lungengängige Insektizidtropfen entstehen können.

### Beschreibung der Erfindung

Es ist daher Aufgabe der vorliegenden Erfindung, eine Vorrichtung zur Bekämpfung von Fluginsekten bereitzustellen, die das wirksame Applizieren von natürlichem Pyrethrum, Pyrethrinen oder Pyrethroiden der ersten und zweiten Generation zur andauernden Bekämpfung von Fluginsekten in Stallungen erlaubt und dabei einen geringen Insektizidverbrauch aufweist.

Diese Aufgabe wird erfindungsgemäß durch eine fernsteuerbare, stationäre, zeitgesteuerte Vorrichtung zur Bekämpfung von Fluginsekten, mittels Begasung bzw. feinem Versprühen eines Insektizids, in offenen und geschlossenen Gebäuden und Stallungen zur Tierhaltung, insbesondere zur Großtierhaltung, bevorzugt in Schweinestallungen, Rinderstallungen und Pferdestallungen, gelöst, die eine Druckluftquelle (beispielsweise 8 bar Speicherdruck) zur Erzeugung eines Druckluftträgerstroms (beispielsweise ca 3 bar Arbeitsdruck), eine erste Leitung, welche die Druckluftquelle mit einem Magnetventil verbindet, einen Timer, der das Magnetventil zeitgesteuert öffnen und schließen kann, eine zweite Leitung, welche das Magnetventil mit einem Druckluftöler verbindet, welcher eine Lösung oder Emulsion eines Insektizids, sowie gegebenenfalls üblichen Hilfsstoffen und Synergisten (beispielsweise Piperonylbutoxid), enthält, und die Lösung oder Emulsion des Insektizids in den Druckluftträgerstrom einbringt, und eine dritte Leitung, welche den Druckluftöler mit einer Mehrzahl von Düsen verbindet, umfasst.

Unter Begasung bzw. feinem Versprühen wird hierbei die Behandlung mit einem Trägergas verstanden, welches eine Lösung oder Emulsion eines Insektizids transportiert.

Der Druckluftöler bzw. die Ölereinheit dient zur Abgabe des Insektizids. Wenn Druckluft einen Druckluftöler durchströmt, erzeugt sie beim Passieren einer Querschnittsverengung einen Unterdruck. Dieser Unterdruck saugt über ein Steigrohr Öl aus einem Vorratsbehälter an. Das Öl gelangt in einen Tropfraum, wird vom Luftstrom vernebelt und dann weitertransportiert. Solche Druckluftöler werden im Stand der Technik verwendet, um technische Anlagen mit geölter Druckluft zu versorgen. Erfindungsgemäß wurde gefunden, dass ein Druckluftöler, sowie äquivalente Vorrichtungen verwendet werden können, um eine Insektizidlösung oder -emulsion in einen Druckluftstrom einzubringen. Die Insektizidlösung oder -emulsion könnte zwar auch durch eine Pumpe, wie beispielsweise eine Kolbenpumpe, in den Druckluftstrom eingebracht werden. Diese Anordnung ist erfindungsgemäß jedoch nicht bevorzugt, da sie, im Gegensatz zu dem erfindungsgemäß verwendeten Druckluftöler, mit hohen Kosten verbunden ist. Zudem kann eine Pumpe die angestrebten Kleinstmengen nicht zuführen. Es würden erhebliche Mittelverschwendungen auftreten.

Die erfindungsgemäße Vorrichtung erlaubt es ein Insektizid zeitgesteuert über eine Mehrzahl an Düsen abzugeben. Wenn der Timer das Magnetventil öffnet strömt Druckluft aus der Druckluftquelle in die erste Leitung, durch das offene Magnetventil in die zweite Leitung und von dort in den Druckluftöler. Der Druckluftöler gibt ein Insektizid an die Druckluft ab. Dann strömt die Druckluft durch die dritte Leitung zu den Düsen. Durch die Düsen wird das von der Druckluft transportierte Insektizid in Form eines Knebels bzw. als Aerosol kleintropfig in den Luftraum der Stallungen freigesetzt. Nach einer festgelegten Zeitspanne schließt der Timer das Magnetventil wieder. Ein solcher Insektizidnebel ist dazu geeignet, Fluginsekten im Flug zu erfassen. Die dritte Leitung kann sich mehrfach verzweigen, so dass eine große Anzahl von Düsen mit dem Insektizid/Luft-Gemisch versorgt werden kann. Die erfindungsgemäße Vorrichtung ist automatisiert und erfordert im Dauerbetrieb, abgesehen vom gelegentlichen Nachfüllen der Insektizidlösung oder -emulsion keinen Benutzereingriff.

Bei regelmäßigem Applizieren von Insektizidsprühstößen wird durch Barrierebildung bzw. Glockenbildung ein Bereich geschaffen, in dem Fluginsekten abgetötet werden bzw. von dem sie ferngehalten werden. Folglich ist die erfindungsgemäße Vorrichtung auch zum Einsatz in nicht komplett bzw. hermetisch abgeschlossen Stallungen geeignet. Dies ist insbesondere für ökologische Betriebe und Betriebe mit teilweisen Auslaufhaltungen (so genannte Offenhaltungen) wichtig.

Die Vorrichtung kann weiterhin eine vierte Leitung umfassen, welche die zweite Leitung mit der dritten Leitung verbindet. Somit wird nur ein Teil der Druckluft durch den Druckluftöler geleitet, während ein anderer Teil der Druckluft durch die vierte Leitung strömt und den Druckluftöler so umgeht. Dieser Bypass erlaubt einen höheren Volumenstrom, was besonders dann wichtig ist wenn die Druckluft über eine lange Strecke geführt werden soll und sehr viele Düsen versorgen muss.

Einige Insektizid-Emulsionen neigen dazu sich bei längerer Lagerung durch Phasentrennung zu entmischen. Dieses Problem wird erfindungsgemäß gelöst, indem der Druckluftöler bevorzugt einen Rührer umfasst, mit welchem das darin aufgenommene Insektizid gerührt werden kann. Besonders bevorzugt handelt es sich bei dem Rührer um einen Magnetrührer. Hierbei befindet sich ein Magnetrührkern im Insektizidbehälter des Druckluftölers. Dieser wird durch einen außerhalb des Insektizidbehälters angeordneten und durch einen Motor in Rotation versetzten Magneten seinerseits in Rotation versetzt. Auf diese Weise kann ein handelsüblicher Druckluftöler mit einem Rührer ausgestattet werden, ohne dass man ihn dazu modifizieren müsste. Alternativ ist auch die Verwendung einer elektrisch oder per Druckluft betriebenen Turbine als Rührer möglich.

Die Düsen sind bevorzugt so eingerichtet, dass sie im Betrieb einen Insektizidlösungsnebel oder Insektizidemulsionsnebel mit einer Tropfengröße von mindestens 30 µm produzieren. Solche Tropfen sind nicht Lungengängig. Da beispielsweise natürliches Pyrethrum bei dermaler Aufnahme nur einen LD₅₀ (Ratte) von 1.500 mg/kg aufweist kann so eine Gesundheitsgefährdung von Mensch und Tier weitgehend ausgeschlossen werden.

Der Druckluftöler ist bevorzugt mit einer Lösung oder Emulsion eines Insektizids befüllt, das ausgewählt ist aus der Gruppe, bestehend aus Pyrethrum, Pyrethrinen, Prallethrinen, Allethrinen, Bioresmethrinen, Tetramethrinen, D-Phenothrinen, Cyflothrinen und Mischungen daraus, wobei Pyrethrum bevorzugt ist. Hierbei handelt es sich um Insektizide die einen "knock down effect" verursachen und zudem sehr instabil sind. Sie werden durch Licht und alkalische Substanzen abgebaut. Insbesondere beim Kontakt mit Gülle erfolgt ein sehr schneller Abbau.

Es ist ausreichend, in der erfindungsgemäßen Vorrichtung verdünnte Lösungen oder Emulsionen des Insektizids zu verwenden. Daher enthält die Lösung oder Emulsion bevorzugt weniger als 5 Gew.-% des Insektizids.

Mindestens eine der Düsen ist bevorzugt im Güllebereich eines Stalls angeordnet. Insbesondere befindet sie sich unterhalb eines angebrachten Spaltenbodens. Hierdurch wird ein bevorzugter Aufenthaltsort der Fluginsekten mit dem Insektizid besprüht und die im Stall gehaltenen Tiere können die Düsen nicht beschädigen. Weiterhin ist bevorzugt mindestens eine der Düsen unter der Decke des Stalls angeordnet, um Fluginsekten, die sich im oberen Luftraum des Stalls aufhalten durch den erzeugten Insektizidnebel zu erfassen.

Das folgende Beispiel soll die vorliegende Erfindung zusammen mit der begleitenden Zeichnung näher erläutern, ohne den Schutzbereich des vorliegenden Patents dabei einzuschränken.

### Beispiel

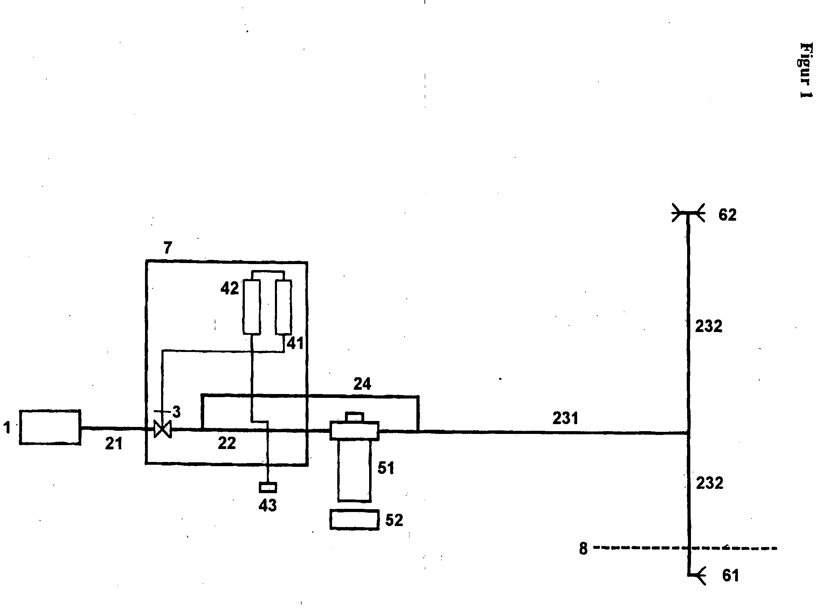

Eine beispielhafte erfindungsgemäße stationäre Vorrichtung zur Bekämpfung von Fluginsekten ist in Figur 1 dargestellt. Sie umfasst einen Kompressor (1) als Druckluftquelle, eine erste Leitung (21), welche die Druckluftquelle (1) mit einem Magnetventil (3) verbindet, einen Timer (41), der das Magnetventil (3) zeitgesteuert öffnen und schließen kann, eine zweite Leitung (22), welche das Magnetventil (3) mit einem Druckluftöler (51) verbindet, eine dritte Leitung (231, 232), welche den Druckluftöler (51) mit einer Mehrzahl an Düsen (61, 62) verbindet und eine vierte Leitung (24), welche die zweite Leitung (22) mit einem ersten Abschnitt der dritten Leitung (231) verbindet.

Der Timer (41) ist mit einer Tagesuhr (42) verbunden, die über einen Netzanschluss (43) mit Strom versorgt wird. Die gewünschten Zeitfenster für die Behandlungen können mittels Reitern in 15 Minuten Takten festgelegt werden. Eine Feinjustierung der Sprüh- und Pausenzeit erfolgt am Timer mittels Sekundeneinstellung.

Das Magnetventil (3), der Timer (41) und die Tagesuhr (42) sind gemeinsam in einer Steuerbox (7) untergebracht. Die Steuerbox (7) umfasst Anschlüsse für die erste Leitung (21), die zweite Leitung (22), die vierte Leitung (24) und den Netzanschluss (42). Sie ist außerhalb des Stalls angebracht, so dass es nicht notwendig ist den Stall zu betreten, um Sprüh- und Pausenzeiten zu verändern.

Die Flüssigkeitskammer des Druckluftölers (51) kann zwischen 200 ml und bis zu 1.000 ml Flüssigkeit aufnehmen. Sie enthält einen Magnetrührkern, welcher durch einen außerhalb des Druckluftölers (51) angeordneten Magnetrührer (52) in Rotation versetzt wird und so eine Phasenbildung in der Flüssigkeitskammer des Druckluftölers (51) verhindert.

Die Düsen (61, 62) sind so eingerichtet, dass sie im Betrieb einen nicht lungengängigen Insektizidnebel mit einer Tropfengröße von mindestens 30 µm produzieren.

Einige der Düsen (61) werden im Güllebereich eines Stalls, unterhalb des Spaltenbodens (8), auf dem die Tiere stehen, angeordnet. Weitere Düsen (62) werden unter der Decke des Stalls angeordnet. Damit werden die wichtigsten Aufenthaltsorte von Fluginsekten abgedeckt und gleichzeitig verhindert, dass die im Stall gehaltenen Tiere die Düsen beschädigen. Um eine einfache Zuführung der Druckluft in den Stall und eine einfache Anordnung der Düsen (61, 62) zu gewährleisten, wird ein erster Abschnitt (231) der dritten Leitung als flexible Leitung ausgestaltet, während ein zweiter Abschnitt (232) der dritten Leitung als Sprühstange ausgeführt wird, die innerhalb eines Abteils des Stalls die Düsen (61) im Güllebereich und die Düsen (62) unter der Decke miteinander verbindet.

Im Betrieb wird der Druckluftöler (51) zunächst mit einer 1 Gew.-%igen Emulsion von natürlichem Pyrethrum befüllt. Diese wird durch Verdünnen aus einem 5 Gew.-%igen Konzentrat erhalten. Die zugeführte Menge der Pyrethrum-Emulsion kann gegebenenfalls über eine Stellschraube am Druckluftöler nachgeregelt werden. Es wird eine Sprühdauer von 5 bis 30 Sekunden eingestellt. Bei starkem Fliegen- und/oder Gnitzenbefall des Stalls werden anfangs Sprühpausen von 6 Minuten gewählt (10 Sprühstöße pro Stunde). Nachdem der Insektendruck durch diese erste intensive Behandlung behoben wurde sind Sprühpausen von 30 Minuten (2 Sprühstöße pro Stunde) ausreichend um einen erneuten Fluginsektenbefall zu verhindern. Im Dauerbetrieb entsteht so ein Verbrauch von ca. 2 Liter Pyrethrum-Konzentrat pro 1000 m² Stallfläche pro Jahr.

### Bezugszeichenliste

- 1:: Kompressor
- 21:: erste Leitung
- 22:: zweite Leitung
- 231:: erster Abschnitt der dritten Leitung
- 232:: zweiter Abschnitt der dritten Leitung
- 24:: vierte Leitung
- 3:: Magnetventil
- 41:: Timer
- 42:: Tagesuhr
- 43:: Netzanschluss
- 51:: Druckluftöler
- 52:: Magnetrührer
- 61:: Düse im Güllebereich des Stalls
- 62:: Düse unter der Decke des Stalls
- 7:: Steuerbox
- 8:: Spaltenboden

## Patentansprüche

1. Fernbedienbar, stationäre, zeitgesteuerte Vorrichtung zur Bekämpfung von Fluginsekten, mittels Begasung von Insektiziden, in offenen und geschlossenen Gebäuden und Stallungen zur Tierhaltung, insbesondere zur Großtierhaltung, bevorzugt in Schweinestallungen, Rinderstallungen und Pferdestallungen, umfassend:
- eine Druckluftquelle (1) zur Bereitstellung eines Druckluftträgerstroms;
- eine erste Leitung (21), welche die Druckluftquelle (1) mit einem Magnetventil (3) verbindet;
- einen Timer (41), der das Magnetventil (3) zeitgesteuert öffnen und schließen kann;
- eine zweite Leitung (22), welche das Magnetventil (3) mit einem Druckluftöler (51) verbindet, welcher eine Lösung oder Emulsion mindestens eines Insektizids, sowie gegebenenfalls übliche Hilfsstoffe und Synergisten, enthält, und die Lösung oder Emulsion des Insektizids in den Druckluftträgerstrom einbringt; und
- eine dritte Leitung (231, 232), welche den Druckluftöler (51) mit einer Mehrzahl von Düsen (61, 62) verbindet,
wobei die Vorrichtung weiterhin eine vierte Leitung (24) umfasst, welche die zweite Leitung (22) mit der dritten Leitung (231, 232) verbindet.

2. Vorrichtung nach Anspruch 1, **dadurch gekennzeichnet, dass** der Druckluftöler (51) einen Rührer (52) umfasst, mit welchem das aufgenommene Insektizid gerührt werden kann.

3. Vorrichtung nach Anspruch 2, **dadurch gekennzeichnet, dass** der Rührer (52) ein Magnetrührer ist.

4. Vorrichtung nach einem der vorhergehenden Ansprüche, **dadurch gekennzeichnet, dass** die Düsen (61, 62) so eingerichtet sind, dass sie im Betrieb einen Insektizidlösungsnebel oder Insektizidemulsionssnebel mit einer Tropfengröße von mindestens 30 µm produzieren.

5. Vorrichtung nach einem der vorhergehenden Ansprüche, **dadurch gekennzeichnet, dass** die Ölereinheit (51) mit einer Lösung oder Emulsion eines Insektizids befüllt ist, das ausgewählt ist aus der Gruppe, bestehend aus Pyrethrum, Pyrethrinen, Prallethrinen, Allethrinen, Bioresmethrinen, Tetramethrinen, D-Phenothrinen, Cyflothrinen und Mischungen daraus, wobei Pyrethrum bevorzugt ist.

6. Vorrichtung nach einem der vorhergehenden Ansprüche, **dadurch gekennzeichnet, dass** die Lösung oder Emulsion weniger als 5 Gew.-% des Insektizids enthält.

7. Vorrichtung nach einem der vorhergehenden Ansprüche, **dadurch gekennzeichnet, dass** mindestens eine der Düsen (61) im Güllebereich eines Stalls angeordnet ist, insbesondere unterhalb eines angebrachten Spaltenbodens, wobei bevorzugt weiterhin mindestens eine der Düsen (62) unter der Decke des Stalls angeordnet ist.

8. Verfahren zur zeitgesteuerten Bekämpfung von Fluginsekten in offenen und geschlossenen Gebäuden und Stallungen zur Tierhaltung, insbesondere zur Großtierhaltung, bevorzugt in Schweinestallungen, Rinderstallungen und Pferdestallungen unter Verwendung einer Vorrichtung gemäß einem der vorhergehenden Ansprüche, umfassend:
- Öffnen eines Magnetventils (3) mittels eines Timers (41);
- Strömen von Druckluft aus einer Druckluftquelle (1) in eine erste Leitung (21), durch das offene Magnetventil (3) in eine vierte Leitung (24) und eine zweite Leitung (22), wobei die Druckluft von der zweiten Leitung (22) in einen Druckluftöler (51) strömt und die Druckluft von der vierten Leitung (24) in eine dritte Leitung (231, 232) strömt, die dem Druckluftöler (51) nachgeschaltet ist;
- Abgeben eines Insektizids an die Druckluft mittels des Druckluftölers (51);
- Strömen der Druckluft aus dem Druckluftöler (51) und aus der vierten Leitung (24) durch die dritte Leitung (231, 232) zu Düsen (61, 62);
- Freisetzen des von der Druckluft transportierten Insektizids in den Luftraum der Stallungen mittels der Düsen (61, 62) in Form eines Nebels; und
- Schließen des Magnetventils (3) mittels des Timers (41).

## Claims

1. A remotely operable, stationary, time-controlled device to combat flying insects by means of gassing with insecticides, in open and closed buildings and stalls for purposes of animal husbandry, in particular for purposes of large animal husbandry, preferably in pigsties, cattle sheds and horses' stables, comprising:
- a compressed air source (1) for the provision of a compressed air carrier flow;
- a first line (21), which connects the compressed air source (1) with a solenoid valve (3);
- a timer (41), which can open and close the solenoid valve (3) in a time-controlled manner;
- a second line (22), which connects the solenoid valve (3) with a compressed air lubricator (51), which contains a solution or emulsion of at least one insecticide, and also standard ancillary substances and synergists as required, and introduces the solution or emulsion of the insecticide into the compressed air carrier flow; and
- a third line (231, 232), which connects the compressed air lubricator (51) with a multiplicity of nozzles (61, 62), wherein
the device furthermore comprises a fourth line (24), which connects the second line (22) with the third line (231, 232).

2. The device in accordance with Claim 1,
**characterised in that** the compressed air lubricator (51) comprises a stirrer (52), with which the insecticide ingested can be stirred.

3. The device in accordance with Claim 2,
**characterised in that** the stirrer (52) is a magnetic stirrer.

4. The device in accordance with one of the preceding claims,
**characterised in that** the nozzles (61, 62) are equipped such that in operation they produce a mist of insecticide solution or insecticide emulsion with a drop size of at least 30 µm.

5. The device in accordance with one of the preceding claims,
**characterised in that** the lubricator unit (51) is filled with a solution or emulsion of an insecticide that is selected from the group consisting of pyrethrum, pyrethrums, prallethrins, allethrins, bioresmethrins, tetramethrins, d-phenoins, cyfluthrins and mixtures of these, wherein
pyrethrum is preferred.

6. The device in accordance with one of the preceding claims,
**characterised in that** the solution or emulsion contains less than 5% by weight of the insecticide.

7. The device in accordance with one of the preceding claims,
**characterised in that** at least one nozzle (61) is arranged in the liquid manure region of a stall, in particular underneath an installed slatted floor,
wherein
preferably furthermore at least one of the nozzles (62) is arranged under the ceiling of the stall.

8. A method for the time-controlled combat of flying insects in open and closed buildings and stalls for purposes of animal husbandry, in particular for purposes of large animal husbandry, preferably in pigsties, cattle sheds and horses' stables, when using a device in accordance with one of the preceding claims, comprising:
- opening of a solenoid valve (3) by means of a timer (41);
- release of compressed air from a compressed air source (1) into a first line (21),
- through the open solenoid valve (3) into a fourth line (24) and a second line (22), wherein
- the compressed air flows from the second line (22) into a compressed air lubricator (51) and the compressed air from the fourth line (24) flows into a third line (231, 232), which is located downstream of the compressed air lubricator (51);
- dispensation of an insecticide into the compressed air by means of the compressed air lubricator (51); flowing of the compressed air out of the compressed air lubricator (51) and out of the fourth line (24) through the third line (231, 232) to nozzles (61, 62);
- release of the insecticide transported by the compressed air into the air space of the stalls by means of the nozzles (61, 62) in the form of a mist; and closing of the solenoid valve (3) by means of the timer (41).

## Revendications

1. Dispositif stationnaire télécommandable et temporisé permettant de lutter contre les insectes volants en projetant du gaz insecticide dans des bâtiments ouverts et fermés et des étables d'élevage d'animaux, notamment d'élevage de gros animaux, de préférence des porcheries, des étables pour bovins et des écuries pour chevaux, comprenant :
- une source d'air comprimé (1) pour fournir un courant convoyeur d'air comprimé ;
- une première canalisation (21) qui relie la source d'air comprimé (1) à une soupape magnétique (3) ;
- un temporisateur (41) qui peut ouvrir et fermer la soupape magnétique (3) de manière temporisée ;
- une deuxième canalisation (22) qui relie la soupape magnétique (3) à un huileur d'air comprimé (51) qui contient une solution ou une émulsion d'au moins un insecticide ainsi que le cas échéant des substances auxiliaires et des synergistes et introduit la solution ou l'émulsion d'insecticide dans le courant convoyeur d'air comprimé ; et
- une troisième canalisation (231, 232) qui relie le huileur d'air comprimé (51) à une pluralité de buses (61, 62),
ce dispositif comprenant en outre une quatrième canalisation (24) qui relie la deuxième canalisation (22) à la troisième canalisation (231, 232).

2. Dispositif selon la revendication 1, **caractérisée en ce que** le huileur d'air comprimé (51) comporte un mélangeur (52) qui permet de mélanger l'insecticide absorbé.

3. Dispositif selon la revendication 2, **caractérisée en ce que** le mélangeur (52) est un mélangeur magnétique.

4. Dispositif selon une des revendications précédentes, **caractérisée en ce que** les buses (61, 62) sont conçues de manière à produire en cours de fonctionnement un brouillard de solution insecticide ou un brouillard d'émulsion insecticide dont les gouttes ont une dimension d'au moins 30 µm.

5. Dispositif selon une des revendications précédentes, **caractérisée en ce que** l'unité du huileur (51) est remplie d'une solution ou émulsion d'insecticide qui est sélectionnée parmi le groupe composé du pyrèthre, des pyréthrines, des pralléthrines, des alléthrines, des bioresméthrines, des tétraméthrines, des D-phénothrines, des cyflothrines et leurs mélanges, le pyrèthre étant privilégié.

6. Dispositif selon une des revendications précédentes, **caractérisée en ce que** la solution ou l'émulsion contient moins de 5 % en poids d'insecticide.

7. Dispositif selon une des revendications précédentes, **caractérisée en ce qu'**au moins une des buses (61) est disposée dans la zone de lisier d'une étable, notamment en dessous d'un caillebotis installé, au moins une des buses (62) étant en outre disposée de préférence sous le plafond de l'étable.

8. Procédé permettant de lutter de manière temporisée contre les insectes volants dans des bâtiments ouverts et fermés et des étables d'élevage d'animaux, notamment d'élevage de gros animaux, de préférence des porcheries, des étables pour bovins et des écuries pour chevaux en utilisant un dispositif selon une des revendications précédentes, comprenant :
- l'ouverture d'une soupape magnétique (3) au moyen d'un temporisateur (41) ;
- l'afflux d'air comprimé depuis une source d'air comprimé (1) dans une première canalisation (21), par le biais de la soupape magnétique ouverte (3) dans une quatrième canalisation (24) et une deuxième canalisation (22), l'air comprimé affluant depuis la deuxième canalisation (22) dans un huileur d'air comprimé (51) et l'air comprimé affluant depuis la quatrième canalisation (24) dans une troisième canalisation (231, 232) qui est installée en aval du huileur d'air comprimé (51) ;
- émission d'un insecticide dans l'air comprimé au moyen du huileur d'air comprimé (51) ;
- afflux de l'air comprimé depuis le huileur d'air comprimé (51) et depuis la quatrième canalisation (24) par le biais de la troisième canalisation (231, 232) vers des buses (61, 62) ;
- libération de l'insecticide transporté par l'air comprimé dans l'air ambiant des étables au moyen des buses (61, 62) sous forme d'un brouillard ; et
- fermeture de la soupape magnétique (3) au moyen du temporisateur (41).
